# EUROPÄISCHE PATENTSCHRIFT

(11) **EP 1 286 059 B1**
(45) Veröffentlichungstag und Bekanntmachung des Hinweises auf die Patenterteilung: **28.11.2007**
(21) Anmeldenummer: 02018451.1
(22) Anmeldetag: 16.08.2002
(51) Int. Cl.: F15B 13/00

(54) **Unterteilungsvorrichtung für Druckmittelkanäle und damit ausgestattetes Kanalbauteil**
System for dividing pressure fluid channels and related channel structural element
Système de séparation des canaux pour fluide sous pression et élément structurel du canal

(30) Priorität: 23.08.2001 DE 20113958 U
(43) Veröffentlichungstag der Anmeldung: 26.02.2003
(73) Patentinhaber: Festo AG & Co., 73734 Esslingen (DE)
(72) Erfinder: Mack, Reinhold, 73773 Aichwald (DE); Bertsch, Rainer, 70565 Stuttgart (DE)
(74) Vertreter: Abel, Martin

(56) Entgegenhaltungen:
- DE-A1- 19 704 006
- GB-A- 1 217 205
- US-A- 4 760 868

## Beschreibung

Die Erfindung betrifft eine Unterteilungsvorrichtung zur fluiddichten Unterteilung eines in einem Kanalbauteil vorgesehenen Druckmittelkanals in zwei koaxial aufeinanderfolgende Kanalabschnitte, mit einem bis zur gewünschten Unterteilungsstelle vollständig in den betreffenden Druckmittelkanal einschiebbaren Kanalunterteiler, der mit zum abdichtenden Zusammenwirken mit der Kanalwandung des Druckmittelkanals vorgesehenen Dichtungsmitteln ausgestattet ist, und mit Fixiermitteln zum Fixieren des Kanalunterteilers an der Unterteilungsstelle.

Ferner betrifft die Erfindung ein Kanalbauteil, das mindestens einen Druckmittelkanal aufweist und mit einer Unterteilungsvorrichtung der zuvor erwähnten Art ausgestattet ist.

Die DE 197 04 006 C2 beschreibt ein als Ventilträger ausgebildetes Kanalbauteil, das von mehreren Druckmittelkanälen durchzogen ist, von denen Zweigkanäle abgehen, die zu einer Bestückungsfläche ausmünden. An der Bestückungsfläche können Ventile montiert werden, die über die Druckmittelkanäle des Kanalbauteils mit Druckmittel versorgt werden. Einer der Druckmittelkanäle ist mittels einer Unterteilungsvorrichtung fluiddicht in zwei aufeinanderfolgende Kanalabschnitte unterteilt, so dass unterschiedliche Druckzonen realisiert werden können. Die Unterteilungsvorrichtung enthält einen aus mehreren Einzelelementen zusammengesetzten Kanalunterteiler, der bis zur gewünschten Unterteilungsstelle in den betreffenden Druckmittelkanal eingeschoben werden kann. Dort lässt er sich durch Betätigung einer integrierten Klemmeinrichtung mit der Kanalwandung verspannen und ortsfest fixieren. Gleichzeitig wird beim Klemmvorgang eine ringförmige Dichtung an die Kanalwandung angepresst.

Obgleich die bekannte Unterteilungsvorrichtung zuverlässig funktioniert, ist die immer noch relativ große Anzahl von Bauteilen zu bemängeln, die die Herstellung und Montage recht aufwendig gestaltet. Der zum Betätigen der Klemmeinrichtung erforderliche Schraubvorgang setzt außerdem eine Zugänglichkeit des Kanalverteilers von beiden Seiten her voraus, was immer dann problematisch ist, wenn der zugeordnete Druckmittelkanal sehr lang ist. Es besteht ferner die Gefahr, dass die Dichtung beim Fixieren des Kanalbauteiles versehentlich nur unzureichend gegen die Kanalwandung vorgespannt wird und Leckage auftritt. Schließlich bereitet es auch Probleme, die bekannte Konstruktion bei Kanalunterteilern sehr kleiner Durchmesser auszuführen.

Aus der GB-A-1 217 205 geht ein Stopfen hervor, der in ein Rohrstück einsteckbar ist, um einen Druckmittelkanal von einem quer dazu verlaufenden Ablasskanal abzusperren. Der Stopfen wird durch ein Verriegelungsteil fixiert, das das Rohrstück außerhalb des Druckmittelkanals durchsetzt.

Es ist die Aufgabe der vorliegenden Erfindung, eine Unterteilungsvorrichtung der eingangs genannten Art zu schaffen, die über einen einfachen Aufbau verfügt, leicht und mit zuverlässiger Abdichtung installiert werden kann und sich auch mit sehr kleinen Abmessungen realisieren lässt. Ferner soll ein Kanalbauteil geschaffen werden, das mit mindestens einer Unterteilungsvorrichtung ausgestattet ist, die diese Bedingungen erfüllt.

Zur Lösung dieser Aufgabe ist bei einer Unterteilungsvorrichtung der eingangs genannten Art vorgesehen, dass der Kanalunterteiler als pfropfartig im betreffenden Druckmittelkanal platzierbares Passformstück mit im Bereich des Außenumfanges angeordneten Dichtungsmitteln ausgebildet ist und dass die Fixiermittel als Verriegelungsmittel ausgebildet sind und mindestens ein durch einen in den Druckmittelkanal einmündenden Querkanal hindurch mit dem Kanalunterteiler in Verriegelungseingriff bringbares Verriegelungsteil enthalten, wobei der Kanalunterteiler aus einem Unterteilungskörper und den daran angeordneten Dichtungsmitteln besteht und der Verriegelungseingriff zwischen dem Verriegelungsteil und dem Unterteilungskörper vorgesehen ist.

Die Aufgabe wird ferner gelöst durch ein Kanalbauteil, das mindestens einen Druckmittelkanal aufweist und mit mindestens einer den Druckmittelkanal fluiddicht unterteilenden Unterteilungsvorrichtung gemäß der vorgenannten Spezifikation ausgestattet ist.

Die erfindungsgemäße Unterteilungsvorrichtung kann wie ein Pfropf durch Einschieben in den zugeordneten Druckmittelkanal an der gewünschten Unterteilungsstelle platziert werden, wobei die auf den Querschnitt des Druckmittelkanals abgestimmte Passform in Verbindung mit den umfangsseitig angeordneten Dichtungsmitteln ohne weiteres eine zuverlässige fluiddichte Unterteilung gewährleistet und insbesondere auf die Integration einer speziellen Klemmeinrichtung in den Kanalunterteiler verzichtet werden kann. Der gewünschte Dichtkontakt wird allein durch die Formgebung des Kanalunterteilers als Passformstück schon gewährleistet. Die ortsfeste Fixierung basiert auf einem Verriegelungseffekt, wobei ein Verriegelungsteil in einen mit dem Druckmittelkanal verbundenen Querkanal eingeführt wird, bis es in den Druckmittelkanal hineinragt und mit dem Kanalunterteiler in Verriegelungseingriff steht. Aufgrund des sehr einfachen Aufbaus der Unterteilungsvorrichtung ist eine kostengünstige Herstellung und auch die Realisierung sehr kleiner Abmessungen möglich. Auch gestaltet sich die ortsfeste Fixierung durch einen Verriegelungsvorgang sehr einfach und erfordert in der Regel keine Spezialwerkzeuge. Da die Dichtungsmittel schon von Anfang an an die Querschnittskontur des zugeordneten Druckmittelkanals angepasst werden können, ist eine optimale Auslegung zur Gewährleistung der gewünschten Dichtfunktion möglich, ohne dass ein nachträgliches Vorspannen gegen die Kanalwandung nach dem Einsetzen in den Druckmittelkanal erforderlich wäre.

Vorteilhafte Weiterbildungen der Erfindung gehen aus den Unteransprüchen hervor.

Die Verriegelungsmittel enthalten zweckmäßigerweise mindestens eine am Außenumfang des Kanalunterteilers vorgesehene Verriegelungsaussparung, in die das Verriegelungsteil eingreifen kann. Diese Verriegelungsaussparung ist zweckmäßigerweise als sich über den gesamten Außenumfang des Kanalunterteilers erstreckende Nut ausgebildet, so dass der Kanalunterteiler beim Einführen in das Kanalbauteil keiner besonderen Ausrichtung bedarf.

Verriegelungsteil und Kanalunterteiler sind vorzugsweise so aufeinander abgestimmt, dass sich ein formschlüssiger Verriegelungseingriff ergibt, durch den der Kanalunterteiler axial unbeweglich oder allenfalls mit geringem Spiel ortsfest gehalten ist.

Der Unterteilungskörper kann sowohl aus Metall als auch aus Kunststoffmaterial gefertigt sein. Es ist zweckmäßig, wenn der Unterteilungskörper einstückig ausgebildet ist.

Die Dichtungsmittel können ein einstückiger Bestandteil des Kanalunterteilers sein, beispielsweise indem sie durch Spritzgießen an den Unterteilungskörper angeformt sind. Bei einer weiteren Ausführungsform verfügen die Dichtungsmittel über einen in einer Umfangsnut des Unterteilungskörpers gehaltenen Dichtungsring.

Zweckmäßigerweise verfügt der Kanalunterteiler im Bereich der Dichtungsmittel über einen Passformabschnitt, der so ausgebildet ist, dass er den gesamten Querschnitt des zugeordneten Druckmittelkanals ausfüllt und der die eigentlich für die fluiddichte Unterteilung verantwortliche Komponente des Kanalunterteilers darstellt. Zusätzlich kann der Kanalunterteiler aber noch einen weiteren Passformabschnitt aufweisen, dessen Querschnitt den zugeordneten Druckmittelkanal nur teilweise ausfüllt, so dass das Druckmittel bei Bedarf vorbeiströmen kann. Die Angriffsstelle für das Verriegelungsteil ist in diesem Fall vorzugsweise axial zwischen den beiden Passformabschnitten angeordnet.

Das Verriegelungsteil ist bevorzugt stiftartig ausgebildet. Ferner verfügt es an seinem bei Einnahme der Verriegelungsstellung dem Kanalunterteiler entgegengesetzten äußeren Ende zweckmäßigerweise über einen Handhabungsabschnitt, an dem das Verriegelungsteil beim Einführen in den Querkanal oder beim Herausziehen aus diesem problemlos erfasst werden kann.

Durch geeignete Sicherungsmittel kann das Verriegelungsteil in der mit dem Kanalunterteiler in Verriegelungseingriff stehenden Verriegelungsposition fixiert werden. Hier bietet sich jede geeignete Maßnahme an, wobei als besonders vorteilhaft eine Ausgestaltung angesehen wird, bei der die Sicherungsmittel ein das Verriegelungsteil haltend übergreifendes und am zugeordneten Kanalbauteil zu befestigendes Sicherungsteil aufweisen. Das Sicherungsteil kann deckelartig ausgebildet sein und über Dichtungsmittel verfügen, die bei am Kanalbauteil befestigtem Zustand des Sicherungsteils um die Mündung des Querkanals herum mit dem Kanalbauteil in Dichtkontakt stehen. Auf diese Weise wird ein Entweichen von Druckmittel aus dem Druckmittelkanal durch den Querkanal hindurch verhindert, wenn der Kanalunterteiler so ausgebildet ist, dass er den Zugang des Druckmittels im Inneren des Druckmittelkanals in den Einmündungsbereich des Querkanals nicht verhindert.

Die Unterteilungsvorrichtung eignet sich vor allem für einen Einsatz im Zusammenhang mit einem Kanalbauteil, das als Ventilträger konzipiert ist und mit zur Fluidsteuerung dienenden Ventilen bestückt ist oder bestückt werden kann. Verfügt ein solches Kanalbauteil über von dem im Inneren verlaufenden Druckmittelkanal abgehende Zweigkanäle, die zu einer Bestückungsfläche für die Ventile führen, besteht die vorteilhafte Möglichkeit, wenigstens einen dieser Zweigkanäle als Querkanal zur Aufnahme des Verriegelungsteils heranzuziehen. Verglichen mit einer ebenfalls möglichen separaten Realisierung eines zur Aufnahme des Verriegelungsteils vorgesehenen Querkanals, hat dies den Vorteil, dass auch vorhandene Kanalbauteile ohne konstruktive Änderungen problemlos mit der Unterteilungsvorrichtung ausgerüstet werden können.

Es ist von Vorteil, wenn die Längenabmessungen des Kanalunterteilers und die am Kanalunterteiler vorgesehene Position der Angriffsstelle für das Verriegelungsteil so auf den gegenseitigen Abstand der in den Druckmittelkanal einmündenden Zweigkanäle abgestimmt sind, dass die Angriffsstelle für das Verriegelungsteil auf gleicher Höhe mit einem Zweigkanal liegt, wenn der Kanalunterteiler bis zu Anlage an einem Anschlagteil in den Druckmittelkanal eingeschoben wird, das durch einen benachbarten Zweigkanal hindurch in den Druckmittelkanal hineinragt. Auf diese Weise kann die Angriffsstelle sehr einfach zielgenau im Bereich des als Querkanal zur Aufnahme des Verriegelungsteils heranzuziehenden Zweigkanals positioniert werden.

Nachfolgend wird die Erfindung anhand der beiliegenden Zeichnung näher erläutert. In dieser zeigen:
- Fig. 1: die erfindungsgemässe Kombination eines Kanalbauteiles und einer einem Druckmittelkanal dieses Kanalbauteils zugeordneten Unterteilungsvorrichtung, wobei die Unterteilungsstelle im Inneren des betreffenden Druckmittelkanals durch eine schraffierte Fläche markiert ist,
- Fig. 2: einen vereinfachten Querschnitt durch die Anordnung der Fig. 1 im Bereich der Unterteilungsstelle gemäß Schnittlinie II-II,
- Fig. 3: einen vereinfachten Längsschnitt durch die Anordnung der Fig. 1 im Bereich des mit der Unterteilungsvorrichtung ausgestatteten Druckmittelkanals gemäß Schnittlinie III-III, und
- Fig. 4: eine perspektivische Einzeldarstellung der Unterteilungsvorrichtung ohne Abbildung des zugeordneten Kanalbauteiles.

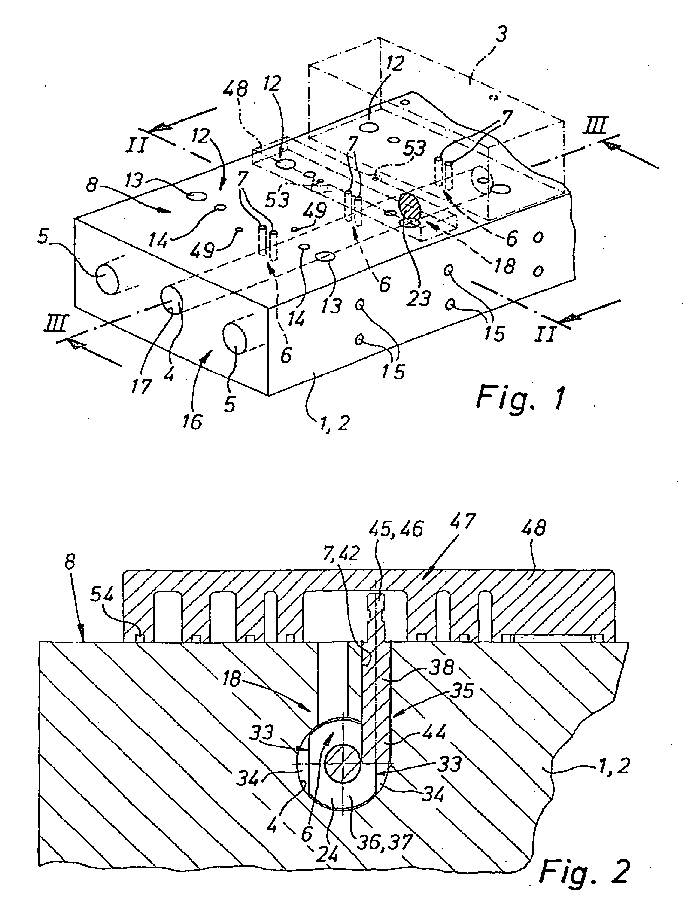

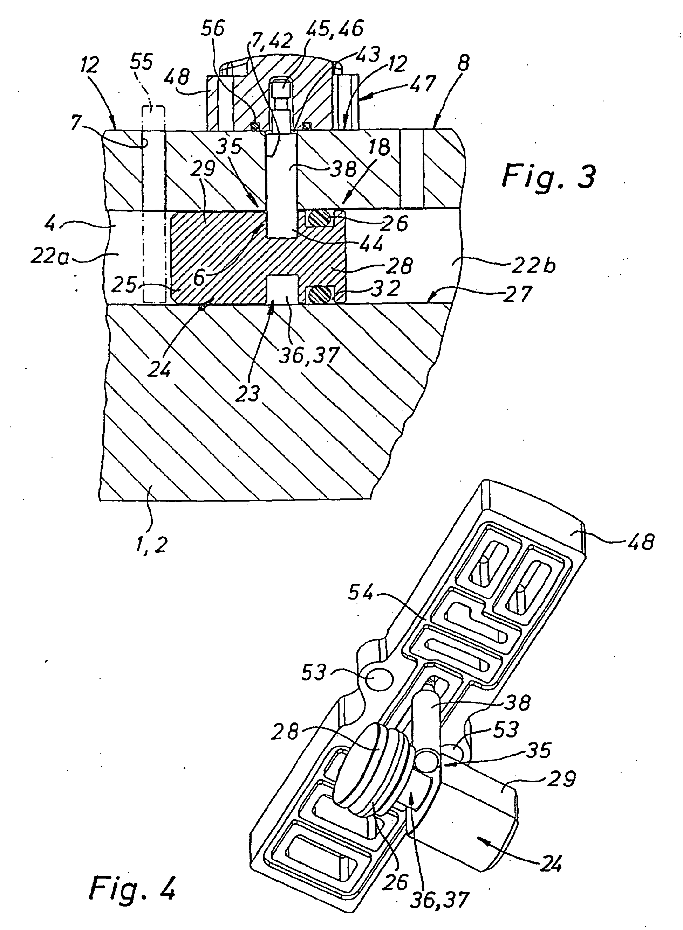

Aus der Zeichnung geht ein von Kanälen durchsetztes Kanalbauteil 1 hervor, wobei in Fig. 1 ein Längenabschnitt dieses Kanalbauteiles 1 gezeigt ist und die Figuren 2 und 3 vereinfachte Schnittdarstellungen des Kanalbauteiles 1 zeigen, bei denen aus Vereinfachungsgründen einige der Kanäle nicht dargestellt sind.

Das Kanalbauteil 1 hat insbesondere platten- oder leistenförmige Gestalt und bildet beim Ausführungsbeispiel einen Ventilträger 2, der mit einer Mehrzahl von zur Fluidsteuerung dienenden Ventilen 3 ausgestattet werden kann. In Fig. 1 ist eines dieser Ventile 3 strichpunktiert angedeutet.

Das Kanalbauteil 1 verfügt über einen als Speisekanal fungierenden Druckmittelkanal, der zur besseren Unterscheidung im Folgenden als erster Druckmittelkanal 4 bezeichnet sei. Er durchsetzt das Kanalbauteil 1 in dessen Längsrichtung.

Weitere Druckmittelkanäle 5 verlaufen ebenfalls innerhalb dem Kanalbauteil 1 und erstrecken sich parallel zu dem ersten Druckmittelkanal 4. Bei ihnen handelt es sich bevorzugt um Abführkanäle. In Figuren 2 und 3 ist lediglich der erste Druckmittelkanal 4 ersichtlich.

Über den ersten Druckmittelkanal 4 kann fluidisches Druckmittel eingespeist werden, beispielsweise ein hydraulisches Druckmittel, vorzugsweise jedoch Druckluft. Über die weiteren Druckmittelkanäle 5 kann das über den ersten Druckmittelkanal 4 eingespeiste Druckmittel wenigstens teilweise wieder abgeführt werden.

Von dem ersten Druckmittelkanal 4 gehen an in Längsrichtung mit Abstand zueinander angeordneten Abzweigstellen 6 jeweils ein oder mehrere Zweigkanäle 7 ab - beim Ausführungsbeispiel jeweils zwei Stück -, die quer und vorzugsweise rechtwinkelig zur Längserstreckung des ersten Druckmittelkanals 4 verlaufen und außen am Kanalbauteil 1 an einer gemeinsamen Bestückungsfläche 8 ausmünden.

Die von den einzelnen Abzweigstellen 6 ausgehenden Zweigkanäle 7 führen zu in Längsrichtung des Kanalbauteiles 1 aufeinanderfolgenden Bestückungsplätzen 12 an der Bestückungsfläche 8. An diesen Bestückungsplätzen 12 können elektrisch und/oder fluidisch betätigbare Ventile 3 montiert werden, insbesondere sogenannte Mehrwegeventile. Wie schon erwähnt, ist in der Zeichnung nur eines dieser Ventile 3 in strichpunktiert angedeuteter Form abgebildet. Im komplett bestückten Zustand sitzt an dem Kanalbauteil 1 eine Mehrzahl von Ventilen 3, die in der Längsrichtung des Kanalbauteiles 1 aufeinanderfolgend angeordnet sind.

Von den weiteren Druckmittelkanälen 5 ausgehende weitere Zweigkanäle 13 münden in vergleichbarer Weise an den einzelnen Bestückungsplätzen 12 zu der Bestückungsfläche 8 aus.

Schließlich enthält das Kanalbauteil 1 noch Arbeitskanäle 14, die ausgehend von den Bestückungsflächen 12 zu einer anderen längsseitigen Außenfläche des Kanalbauteiles 1 führen, wo sie mit Anschlussöffnungen 15 enden. Die Anschlussöffnungen 15 sind so ausgebildet, dass sich daran Fluidleitungen anschließen lassen, die zu einem oder mehreren zu betätigenden Verbrauchern führen, beispielsweise zu fluidbetätigten Antrieben.

Die Ventile 3 sind in an sich bekannter Weise mit einem oder mehreren Ventilgliedern ausgestattet, die in einer oder mehreren Ventilkammern angeordnet sind, die mit Ventilkanälen kommunizieren. Diese Ventilkanäle münden außen zu einer Montagefläche des jeweiligen Ventils 3 aus, mit der das betreffende Ventil 3 am zugeordneten Bestückungsplatz 12 der Bestückungsfläche 8 montierbar ist. Die Mündungen der Ventilkanäle sind dabei so ausgerichtet, dass sie mit den an den Bestückungsplätzen 12 befindlichen Mündungen der Zweigkanäle 7, 13 und Arbeitskanäle 14 fluchten und dadurch eine fluidische Verbindung vorliegt. Im Betrieb kann nun durch entsprechende Ansteuerung der Ventile 3 das über den ersten Druckmittelkanal 4 eingespeiste Druckmittel gesteuert zu den Arbeitskanälen 14 geleitet werden und das von den angeschlossenen Verbrauchern zurückströmende Druckmittel über die Abführkanäle 5 abgeführt werden. Das Kanalbauteil 1 fungiert hier quasi als Fluidverteiler.

Die Einspeisung des Druckmittels in den ersten Druckmittelkanal 4 erfolgt zweckmäßigerweise stirnseitig an dem Kanalbauteil 1. Ist für alle angeschlossenen Ventile 3 der gleiche Speisedruck vorgesehen, erfolgt die Einspeisung des Druckmittels zweckmäßigerweise von lediglich einer Stirnseite des Kanalbauteiles 1 her, beispielsweise über die an der in Fig. 1 sichtbaren einen Stirnfläche 16 vorgesehene Kanalmündung 17 des ersten Druckmittelkanals 4. Die an der entgegengesetzten, nicht dargestellten anderen Stirnfläche des Kanalbauteiles 1 liegende Kanalmündung des ersten Druckmittelkanals 4 kann in diesem Falle verschlossen sein, beispielsweise durch ein geeignetes Abschlussteil.

Ab und an machen es besondere Einsatzbedingungen erforderlich, den angeschlossenen Verbrauchern unterschiedlich hohe Speisedrücke zur Verfügung zu stellen. In diesem Falle ermöglicht die erfindungsgemässe Unterteilungsvorrichtung 18 eine fluiddichte Unterteilung des ersten Druckmittelkanales 4 in zwei aufeinanderfolgend angeordnete erste und zweite Kanalabschnitte 22a, 22b. Die Unterteilungsvorrichtung 18 wirkt innerhalb des ersten Druckmittelkanales 4 als Trennwand, wobei nun die Möglichkeit besteht, die beiden Kanalabschnitte 22a, 22b unabhängig voneinander und insbesondere mit voneinander abweichendem Druckniveau mit Druckmittel zu versorgen, das dann über die vom dem betreffenden Kanalabschnitt 22a, 22b abgehenden Zweigkanäle 7 den angeschlossenen Ventilen 3 zur Verfügung steht. Während der erste Kanalabschnitt 22a weiterhin über die Kanalmündung 17 an der einen Stirnfläche 16 gespeist wird, erfolgt dann zweckmäßigerweise die Speisung des anderen, zweiten Kanalabschnittes 22b über die an der entgegengesetzten Stirnfläche des Kanalbauteiles 1 vorgesehene Kanalmündung hinweg.

Die Stelle, an der der erste Druckmittelkanal 4 durch die Unterteilungsvorrichtung 18 druckdicht unterteilt wird, sei als Unterteilungsstelle 23 bezeichnet. Eine mögliche Position ist in Fig. 1 durch eine Schraffur markiert.

Die Unterteilungsvorrichtung 18 enthält einen durch eine der stirnseitigen Kanalmündungen des ersten Druckmittelkanals 4 hindurch in diesen ersten Druckmittelkanal 4 einführbaren Kanalunterteiler 24, der mit einer einfachen Stange oder einem sonstigen geeigneten Gegenstand bis zur gewünschten Unterteilungsstelle 23 eingeschoben werden kann.

Der Kanalunterteiler 24 kann sehr einfach aufgebaut sein und besteht beim Ausführungsbeispiel lediglich aus einem einstückigen Unterteilungskörper 25 mit im Bereich des radial orientierten Aussenumfanges angeordneten Dichtungsmitteln 26. Die Dichtungsmittel 26 sind zum abdichtenden Zusammenwirken mit der Kanalwandung 27 des ersten Druckmittelkanals 4 vorgesehen. In Verbindung mit dem gasundurchlässig ausgebildeten Unterteilungskörper 25 kann somit durch den Kanalunterteiler 24 innerhalb des ersten Druckmittelkanales 4 eine wirksame Barriere für in den ersten Druckmittelkanal 4 eingespeistes Druckmittel geschaffen werden.

Der Kanalunterteiler 24 enthält keinerlei Mittel, die nach dem Einschieben in den ersten Druckmittelkanal 4 zu betätigen wären, um den erforderlichen Dichtkontakt zwischen den Dichtungsmitteln 26 und der Kanalwandung 27 herzustellen. Ursache dafür ist die von vorne herein gewählte Ausbildung des Kanalunterteilers als Passformstück, dessen Außenkontur bereits an die Innenkontur des ersten Druckmittelkanals 4 so angepaßt ist, dass der gewünschte Abdichteffekt gegeben ist. Der Kanalunterteiler 24 braucht lediglich vergleichbar einem Pfropf an der gewünschten Unterteilungsstelle 23 platziert werden, wo die Dichtungsmittel 26 unmittelbar die gewünschte Dichtwirkung entfalten.

Zweckmäßigerweise wird man die Dichtungsmittel 26 so gestalten, dass ihr Umriß vor dem Einschieben in den ersten Druckmittelkanal 4 geringfügig größer ist als derjenige des ersten Druckmittelkanals 4, so dass sie beim Einschieben des Kanalunterteilers 24 radial elastisch verformt werden und sich eine Rückstellkraft aufbaut, mit der die Dichtungsmittel 26 gegen die Kanalwandung 27 vorgespannt sind.

Beim Verschieben des Kanalunterteilers 24 in dem ersten Druckmittelkanal 4 müssen somit Reibungskräfte überwunden werden, die aus der Anpresskraft zwischen den Dichtungsmitteln 26 und der Kanalwandung 27 resultieren.

Die Außenkontur des Unterteilungskörpers 25 ist ebenfalls an die Innenkontur des ersten Druckmittelkanals 4 angepaßt, wobei die Passform so gewählt ist, dass der Unterteilungskörper 25, ohne die Dichtungsmittel 26 betrachtet, möglichst spielfrei und allenfalls mit geringem Radialspiel in dem ersten Druckmittelkanal 5 angeordnet werden kann. Auf diese Weise erhält der Kanalunterteiler 24 innerhalb des ersten Druckmittelkanales 4 eine stabile Ausrichtung.

Der Unterteilungskörper 25 kann beispielsweise aus Metall und dabei insbesondere aus Aluminiummaterial bestehen. Eine Kunststoffausführung ist ebenfalls möglich.

Zweckmäßigerweise verfügt der Kanalunterteiler 24 im Bereich der Dichtungsmittel 26 über einen ersten Passformabschnitt 28, der so ausgebildet ist, dass er den gesamten Querschnitt des ersten Druckmittelkanals 4 ausfüllt. Der Unterteilungskörper 25 hat an dem ersten Passformabschnitt 28 eine der Innenkontur des ersten Druckmittelkanals 4 entsprechende Außenkontur, wobei die Dichtungsmittel 26 vorzugsweise aus einem oder mehreren Dichtungsringen bestehen, die in einer sich rings um den Unterteilungskörper 25 erstreckenden Umfangsnut 32 des Unterteilungskörpers 25 gehalten sind.

Beim Ausführungsbeispiel besitzt der Kanalunterteiler 24 einen weiteren, zweiten Passformabschnitt 29, der sich axial an den ersten Passformabschnitt 28 anschließt. Er ist so ausgebildet, dass er den Querschnitt des zugeordneten ersten Druckmittelkanals 4 nur teilweise ausfüllt, was aus Fig. 2 deutlich wird. Während der erste Passformabschnitt 28 vom Unterteilungskörper 25 und den Dichtungsmitteln 26 gemeinsam gebildet ist, besteht der zweite Passformabschnitt 29 ausschließlich aus einem Längenabschnitt des Unterteilungskörpers 25. Dieser hat die Gestalt eines an diametral gegenüberliegenden Umfangsseiten abgeflachten Zylinders, wobei zwischen den Abflachungen 33 und den diesen zugewandten Abschnitten der Kanalwandung 27 Zwischenräume 34 definiert sind. Die Zwischenräume könnten auch durch eine andere Formgebung des zweiten Passformabschnittes 29 definiert werden.

Zweckmäßigerweise bilden die beiden Passformabschnitte 28, 29 die einander entgegengesetzten Endabschnitte des Kanalunterteilers 24, so dass die Zwischenräume 34 zu dem sich anschließenden ersten Kanalabschnitt 22a hin offen sind.

Um den Kanalunterteiler 24 an der gewünschten Unterteilungsstelle 23 fixieren zu können, ist die Unterteilungsvorrichtung 18 mit geeigneten Fixiermitteln ausgestellt, die vorteilhafterweise als Verriegelungsmittel 35 ausgebildet sind. Durch diese Verriegelungsmittel 35 wird der Kanalunterteiler 24 zweckmäßigerweise rein formschlüssig ortsfest bezüglich dem Kanalbauteil 1 lösbar fixiert.

Die Verriegelungsmittel enthalten zweckmäßigerweise eine am Außenumfang des Kanalunterteilers vorgesehene Verriegelungsaussparung 36, die insbesondere als sich über den gesamten Außenumfang des Kanalunterteilers 24 erstreckende Umfangsnut 37 ausgeführt ist. Das Ausführungsbeispiel verfügt über eine solche Umfangsnut 37, die zweckmäßigerweise zwischen den beiden Passformabschnitten 28, 29 sitzt.

Des weiteren enthalten die Verriegelungsmittel 35 ein vorzugsweise stiftartig ausgebildetes Verriegelungsteil 38, das durch einen in den ersten Druckmittelkanal 4 einmündenden Querkanal 42 hindurch mit dem Kanalunterteiler 24 in Verriegelungseingriff bringbar ist, indem es in die Verriegelungsaussparung 36 hineinragt.

Der Querkanal 42 ist zu einer Außenfläche des Kanalbauteils 1 hin offen, so dass das Verriegelungsteil 38 durch die entsprechende Öffnung 43 hindurch bequem in den Querkanal 42 von außen her soweit eingeschoben werden kann, bis es mit einem Verriegelungsabschnitt 44 aus dem Querkanal 42 hinaus in den ersten Druckmittelkanal 4 und dort in die Verriegelungsaussparung 36 des Kanalunterteilers 24 hinein ragt. Der Verriegelungsabschnitt 44 ist zweckmäßigerweise vom einen Endabschnitt des Längserstreckung aufweisenden Verriegelungsteiles 38 gebildet.

Der Verriegelungsabschnitt 44 und die Verriegelungsaussparung 36 sind zweckmäßigerweise in ihren Querabmessungen so aufeinander abgestimmt, dass der Verriegelungseingriff, zumindest in der Längsrichtung des zugeordneten ersten Druckmittelkanals 4, ein formschlüssiger Verriegelungseingriff ist und der Kanalunterteiler axial spielfrei gehalten wird.

Das Verriegelungsteil 38 kann sich innerhalb des zweckmäßigerweise rechtwinkelig zum ersten Druckmittelkanal 4 verlaufenden Querkanales 42 seitlich abstützen und dadurch die über den Kanalunterteiler 24 auf es einwirkenden Kräfte problemlos aufnehmen. Es ist von Vorteil, wenn das Verriegelungsteil 38 ein spielfrei oder allenfalls mit geringem Spiel in den Querkanal 42 einsteckbarer Passkörper ist. Der Querschnitt des Querkanals 42 und des Verriegelungsteiles 38 ist vorzugsweise kreisförmig.

Es wäre prinzipiell möglich, mehrere Verriegelungsteile 38 zur ortsfesten Verriegelung des Kanalunterteilers 24 vorzusehen, doch wird in aller Regel ein einziges Verriegelungsteil 38 ohne weiteres ausreichend sein.

Der zur Aufnahme des Verriegelungsteiles 38 dienende Querkanal 42 kann prinzipiell ein eigenständiger, nur für Verriegelungszwecke dienender Kanal sein. Als vorteilhafter wird jedoch die beim Ausführungsbeispiel realisierte Variante angesehen, bei der einer der sowieso vorhandenen Zweigkanäle 7 des ersten Druckmittelkanals 4 als Querkanal 42 zur Aufnahme des Verriegelungsteiles 38 herangezogen wird. Auf diese Weise läßt sich die Unterteilungsvorrichtung 18 ohne großen Aufwand mit einem Kanalbauteil 1 kombinieren, was insbesondere auch eine einfache Nachrüstung bereits vorhandener Kanalbauteile ermöglicht.

Bei entsprechender Ausgestaltung der Zweigkanäle 7 ist es sogar möglich, einen dieser Zweigkanäle 7 zur Aufnahme des Verriegelungsteiles 38 und gleichwohl das am zugeordneten Bestückungsplatz angeordnete Ventil 3 ohne relevante Einschränkung weiter zu benutzen. Beim Ausführungsbeispiel eröffnet sich diese Möglichkeit dadurch, dass an den Abzweigstellen 6 jeweils zwei Zweigkanäle 7 zum zugeordneten Bestückungsplatz 12 abgehen und somit bei Nutzung eines dieser Zweigkanäle 7 als Querkanal 42 der andere Zweigkanal 7 weiterhin zur Fluidübertragung zwischen dem ersten Druckmittelkanal 4 und dem angesetzten Ventil 3 zur Verfügung steht. Dabei kann das Druckmittel durch die längsseitigen Zwischenräume 34 hindurch an dem Kanalunterteiler 34 vorbeiströmen, um zu dem freien Zweigkanal 7 zu gelangen, der sich auf Höhe des Verriegelungseingriffes zwischen dem Verriegelungsteil 38 und dem Unterteilungskörper 35 befindet.

Die Länge des Verriegelungsteiles 38 ist zweckmäßigerweise so gewählt, dass es bei hergestelltem Verriegelungseingriff mit seinem dem Verriegelungsabschnitt 44 entgegengesetzten äußeren Endabschnitt 45 aus dem Kanalbauteil 1 hinausragt. Beim Ausführungsbeispiel steht es mit diesem äußeren Endabschnitt 45 über die Bestückungsfläche 8 über. Dadurch kann der äußere Endabschnitt 45 als Handhabungsabschnitt 46 fungieren, an dem sich das Verriegelungsteil 38 ergreifen läßt, um das Verriegelungsteil 38 in den Querkanal 32 einzustecken oder, bei Nichtgebrauch, herauszuziehen.

Es ist von Vorteil, wenn die Unterteilungsvorrichtung 18 auch über Sicherungsmittel 47 verfügt, die eine Positionssicherung des Verriegelungsteils 38 in der mit dem Kanalunterteiler 24 in Verriegelungseingriff stehenden Verriegelungsposition bewirken.

Solche Sicherungsmittel 47 könnten beispielsweise eine Sicherungsschraube beinhalten, die am Kanalbauteil 1 in einer Weise festlegbar ist, dass sie gleichzeitig das Verriegelungsteil 38 festhält. Denkbar wäre es auch, das Verriegelungsteil 38 und den Querkanal 42 mit zueinander komplementären Gewindemitteln auszustatten, so dass das Verriegelungsteil 38 nicht ausschließlich als Einsteckteil wie beim Ausführungsbeispiel ausgeführt wäre, sondern ganz oder teilweise als Einschraubteil gestaltet wäre.

Das Verriegelungsteil 38 des Ausführungsbeispieles ist, wie schon erwähnt, ein Einsteckteil, das allein durch einen Steckvorgang am Kanalbauteil installiert wird. Die Sicherungsmittel 47 bilden praktisch einen Anschlag, der ein Herausfallen oder ein Herausziehen des Verriegelungsteiles 38 aus dem Querkanal 32 verhindert.

Befindet sich die Unterteilungsvorrichtung 18 im Bereich eines mit einem Ventil 3 bestückten Bestückungsplatzes 12, kann das Ventil 3 selbst als Sicherungsteil mit entsprechender Anschlagfunktion fungieren. Ist hingegen der zugeordnete Bestückungsplatz 12 nicht von einem Ventil 3 besetzt, wie dies bei dem in Figuren 2 und 3 gezeigten Bestückungsplatz der Fall ist, enthalten die Sicherungsmittel 47 zweckmäßigerweise ein separates Sicherungsteil 48, das anstelle des Ventiles 3 am entsprechenden Bestückungsplatz 12 montiert wird. Es kann unter Verwendung der am Kanalbauteil 1 vorgesehenen Befestigungsmittel 49 am Kanalbauteil 1 festgelegt werden. Beim Ausführungsbeispiel bestehen die am Kanalbauteil 1 angeordneten Befestigungsmittel 49 aus mit Gewinde versehenen Befestigungsbohrungen, wobei am Sicherungsteil 48 fluchtende Befestigungslöcher 53 vorgesehen sind, durch die sich jeweils eine Befestigungsschraube zum Einschrauben in die Gewindebohrungen hindurchführen läßt.

Im am Kanalbauteil 1 montierten Zustand übergreift das Sicherungsteil 48 den äußeren Endabschnitt 45 des verriegelungsteiles 38 und sichert dessen Position vergleichbar einem Anschlagelement.

Das Sicherungsteil 48 erfüllt beim Ausführungsbeispiel auch noch eine Verschlussfunktion, indem es die zu dem zugeordneten Bestückungsplatz 12 ausmündenden Kanäle des Kanalbauteiles 1 fluiddicht verschließt. Dadurch bleibt die sich aus den Ventilen 3 und dem Kanalbauteil 1 zusammensetzende Fluidsteuervorrichtung weiterhin voll funktionsfähig.

Zweckmäßigerweise ist das Sicherungsteil 48 an der der Bestückungsfläche 8 zugewandten Unterseite mit Dichtungsmitteln 56 ausgestattet, die im am Kanalbauteil 1 montierten Zustand zumindest um die Mündung 43 des Querkanals 42 herum und vorzugsweise auch um die Mündungen der anderen Zweigkanäle herum mit dem Kanalbauteil 1 in Dichtkontakt stehen. In Fig. 4 sind an der Unterseite des Sicherungsteiles 48 ausgebildete Vertiefungen 54 ersichtlich, in denen die Dichtungsmittel 56 einsitzen können.

Es versteht sich, dass das Verschlussteil nicht notwendigerweise eine Positionssicherungsfunktion bezüglich des Verriegelungsteiles 38 auszuführen hat, wenn anderweitig eine geeignete Positionssicherung gewährleistet wird.

Um die Unterteilungsvorrichtung 18 zu installieren, genügt es, den Kanalunterteiler 24 mit einem geeigneten Gegenstand bis zur gewünschten Unterteilungsstelle 23 zu verschieben und dort durch Einführen des Verriegelungsteiles 38 ortsfest zu arretieren. Die Positionierung des Kanalunterteilers 24 kann beispielsweise dadurch vereinfacht werden, dass dessen Längenabmessungen und die Position der am Kanalunterteiler 24 vorgesehenen Angriffsstelle für das Verriegelungsteil 38 so auf den in Längsrichtung des ersten Druckmittelkanals 4 gemessenen gegenseitigen Abstand der Zweigkanäle 7 abgestimmt sind, dass die Angriffsstelle auf gleicher Höhe mit einem als Querkanal 42 zu verwendenden Zweigkanal 7 liegt, wenn der Kanalunterteiler 24 bis zur Anlage an einem durch einen benachbarten Zweigkanal hindurch in den ersten Druckmittelkanal 4 eingesteckten Anschlagteil in den ersten Druckmittelkanal 4 eingeschoben ist.

In Fig. 3 ist strichpunktiert angedeutet, wie ein z.B. stiftartiges Anschlagteil 55 in einen Zweigkanal 7 eingeschoben ist, bis es in den ersten Druckmittelkanal 4 hineinragt. Der sich an die Verriegelungsaussparung 36 anschließende zweite Passformabschnitt 29 hat eine Länge, die dem axialen Abstand zwischen dem mit dem Anschlagteil 55 bestückten Zweigkanal 7 und dem diesem Zweigkanal 7 benachbarten und als Querkanal 42 genutzten Zweigkanal 7 entspricht. Der Kanalunterteiler 24 kann nun einfach so weit in den ersten Druckmittelkanal 4 eingeschoben werden, bis er mit der Stirnseite des zweiten Passformabschnittes 29 am Anschlagteil 55 zur Anlage gelangt. Dann befindet sich die vorliegend von der Verriegelungsaussparung 36 definierte Angriffsstelle für das Verriegelungsteil 38 automatisch auf Höhe des gewünschten Querkanals 42.

## Patentansprüche

1. Unterteilungsvorrichtung zur fluiddichten Unterteilung eines in einem Kanalbauteil (1) vorgesehenen Druckmittelkanals (4) in zwei koaxial aufeinanderfolgende Kanalabschnitte (22a, 22b), mit einem bis zur gewünschten Unterteilungsstelle (23) vollständig in den betreffenden Druckmittelkanal (4) einschiebbaren Kanalunterteiler (24), der mit zum abdichtenden Zusammenwirken mit der Kanalwandung (27) des Druckmittelkanals (4) vorgesehenen Dichtungsmitteln (26) ausgestattet ist, und mit Fixiermitteln zum Fixieren des Kanalunterteilers (24) an der Unterteilungsstelle (23), **dadurch gekennzeichnet, dass** der Kanalunterteiler (24) als pfropfartig im betreffenden Druckmittelkanal (4) platzierbares Passformstück mit im Bereich des Außenumfanges angeordneten Dichtungsmitteln (26) ausgebildet ist und dass die Fixiermittel als Verriegelungsmittel (35) ausgebildet sind und mindestens ein durch einen in den Druckmittelkanal (4) einmündenden Querkanal (42) hindurch mit dem Kanalunterteiler (24) in Verriegelungseingriff bringbares Verriegelungsteil (38) enthalten, wobei der Kanalunterteiler (24) aus einem Unterteilungskörper (25) und den daran angeordneten Dichtungsmitteln (26) besteht und der Verriegelungseingriff zwischen dem Verriegelungsteil (38) und dem Unterteilungskörper (25) vorgesehen ist.

2. Unterteilungsvorrichtung nach Anspruch 1, **dadurch gekennzeichnet, dass** die Verriegelungsmittel (35) mindestens eine am Außenumfang des Kanalunterteilers (24) vorgesehene Verriegelungsaussparung (36) enthalten, in die das Verriegelungsteil (38) eingreifen kann.

3. Unterteilungsvorrichtung nach Anspruch 2, **dadurch gekennzeichnet, dass** die Verriegelungsaussparung (36) als sich über den gesamten Außenumfang des Kanalunterteilers (24) erstreckende Umfangsnut (37) ausgebildet ist.

4. Unterteilungsvorrichtung nach einem der Ansprüche 1 bis 3, **dadurch gekennzeichnet, dass** das Verriegelungsteil (38) und der Kanalunterteiler (24) derart ausgebildet sind, dass sich ein zumindest in der Längsrichtung des zugeordneten Druckmittelkanals (4) formschlüssiger Verriegelungseingriff ergibt.

5. Unterteilungsvorrichtung nach einem der Ansprüche 1 bis 4, **dadurch gekennzeichnet, dass** der Unterteilungskörper (25) einstückig ausgebildet ist.

6. Unterteilungsvorrichtung nach einem der Ansprüche 1 bis 5, **dadurch gekennzeichnet, dass** die Dichtungsmittel (26) mindestens einen in einer Umfangsnut (32) des Unterteilungskörpers (25) gehaltenen Dichtungsring aufweisen.

7. Unterteilungsvorrichtung nach einem der Ansprüche 1 bis 6, **dadurch gekennzeichnet, dass** der Kanalunterteiler (24) im Bereich der Dichtungsmittel (26) einen Passformabschnitt (28) aufweist, der so ausgebildet ist, dass er den gesamten Querschnitt des zugeordneten Druckmittelkanals (4) ausfüllt.

8. Unterteilungsvorrichtung nach Anspruch 7, **dadurch gekennzeichnet, dass** der Kanalunterteiler (24) einen weiteren Passformabschnitt (29) aufweist, der so ausgebildet ist, dass er den Querschnitt des zugeordneten Druckmittelkanals (4) nur teilweise ausfüllt, wobei sich die Angriffsstelle für das Verriegelungsteil (38) zweckmäßigerweise axial zwischen den beiden Passformabschnitten (28, 29) befindet.

9. Unterteilungsvorrichtung nach Anspruch 8, **dadurch gekennzeichnet, dass** der weitere Passformabschnitt (29) am Außenumfang einen oder mehrere abgeflachte Bereiche (33) aufweist.

10. Unterteilungsvorrichtung nach einem der Ansprüche 1 bis 9, **dadurch gekennzeichnet, dass** das mindestens eine Verriegelungsteil (38) stiftartig ausgebildet ist.

11. Unterteilungsvorrichtung nach einem der Ansprüche 1 bis 10, **dadurch gekennzeichnet, dass** das mindestens eine Verriegelungsteil (38) eine derartige Länge besitzt, dass es im Verriegelungszustand mit seinem dem Kanalunterteiler (24) entgegengesetzten Endabschnitt (45) ein Stück weit aus dem zugeordneten Kanalbauteil (1) herausragt, wobei der herausragende Endabschnitt (45) zweckmäßigerweise einen Handhabungsabschnitt (46) zum Ergreifen des Verriegelungsteiles (38) bildet.

12. Unterteilungsvorrichtung nach einem der Ansprüche 1 bis 11, **gekennzeichnet durch** Sicherungsmittel (47) zur Positionssicherung des Verriegelungsteiles (38) in der mit dem Kanalunterteiler (24) in Verriegelungseingriff stehenden Verriegelungsposition.

13. Unterteilungsvorrichtung nach Anspruch 12, **dadurch gekennzeichnet, dass** die Sicherungsmittel (47) ein das Verriegelungsteil (38) haltend übergreifendes und am zugeordneten Kanalbauteil (1) zu befestigendes Sicherungsteil (48) aufweisen.

14. Unterteilungsvorrichtung nach Anspruch 13, **dadurch gekennzeichnet, dass** das Sicherungsteil (48) als vorzugsweise deckelartiges Verschlussteil ausgebildet ist und über Dichtungsmittel (53) verfügt, die bei am Kanalbauteil (1) befestigtem Sicherungsteil (48) zumindest um die Mündung (43) des Querkanals (42) herum mit dem Kanalbauteil (1) in Dichtkontakt stehen.

15. Kanalbauteil mit Unterteilungsvorrichtung, mit einem Kanalbauteil (1), das mindestens einen Druckmittelkanal (4) aufweist, dem mindestens eine Unterteilungsvorrichtung (18) nach einem der Ansprüche 1 bis 14 zugeordnet ist.

16. Kanalbauteil mit Unterteilungsvorrichtung nach Anspruch 15, **gekennzeichnet durch** eine Ausgestaltung des Kanalbauteiles (1) als Ventilträger für zur Fluidsteuerung dienende Ventile (3).

17. Kanalbauteil mit Unterteilungsvorrichtung nach Anspruch 16, **dadurch gekennzeichnet, dass** von dem den Kanalunterteiler (24) aufnehmenden Druckmittelkanal (4) mehrere Zweigkanäle (7) abgehen, die zu einer Bestückungsfläche (8) für die Ventile (3) ausmünden und von denen wenigstens einer einen Querkanal (42) zur Aufnahme eines Verriegelungsteiles (38) bildet.

18. Kanalbauteil mit Unterteilungsvorrichtung nach Anspruch 17, **dadurch gekennzeichnet, dass** die Längenabmessungen des Kanalunterteilers (24) und die Position der am Kanalunterteiler (24) vorgesehenen Angriffsstelle für das Verriegelungsteil (38) so auf den gegenseitigen Abstand der Zweigkanäle (7) abgestimmt sind, dass die Angriffsstelle auf gleicher Höhe mit einem Zweigkanal (7, 42) liegt, wenn der Kanalunterteiler (24) bis zur Anlage an einem durch einen benachbarten Zweigkanal (7) hindurch in den Druckmittelkanal (4) eingeführten Anschlagteil (55) in den Druckmittelkanal (4) eingeschoben ist.

## Claims

1. Sub-dividing device for the fluid-tight sub-division of a pressure medium passage (4) provided in a passage component (1) into two coaxially consecutive passage sections (22a, 22b), with a passage sub-divider (24) which may be pushed completely into the pressure medium passage (4) concerned up to a desired sub-division point (23) and which is equipped with sealing means (26) provided for sealing interaction with the passage wall (27) of the pressure medium passage (4), and with fixing means for fixing the passage sub-divider (24) at the sub-division point (23), **characterised in that** the passage sub-divider (24) is in the form of a plug-like precise fitting element which may be placed in the relevant pressure medium passage (4), with sealing means (26) located in the area of the outer periphery, and that the fixing means are in the form of locking means (35) containing at least one locking element (38) which may be brought into locking engagement with the passage sub-divider (24) through a cross-passage (42) leading into the pressure medium passage (4), wherein the passage sub-divider (24) comprises a sub-dividing body (25) and the sealing means (26) attached thereto, and the locking engagement is provided between the locking element (38) and the sub-dividing body (25).

2. Sub-dividing device according to claim 1, **characterised in that** the locking means (35) contain at least one locking recess (36) provided on the outer periphery of the passage sub-divider (24), in which the locking element (38) can engage.

3. Sub-dividing device according to claim 2, **characterised in that** the locking recess (36) is in the form of a circumferential slot (37) extending over the whole outer periphery of the passage sub-divider (24).

4. Sub-dividing device according to any of claims 1 to 3, **characterised in that** the locking element (38) and the passage sub-divider (24) are so designed that a positive locking engagement results, at least in the axial direction of the assigned pressure medium passage (4).

5. Sub-dividing device according to any of claims 1 to 4, **characterised in that** the sub-dividing body (25) is designed as a one-piece unit.

6. Sub-dividing device according to any of claims 1 to 5, **characterised in that** the sealing means (26) have one or more seal rings held in a circumferential slot (32) of the sub-dividing body (25).

7. Sub-dividing device according to any of claims 1 to 6, **characterised in that** the passage sub-divider (24) has in the area of the sealing means (26) a precise fitting section (28) which is so designed that it fills the entire cross-section of the assigned pressure medium passage (4).

8. Sub-dividing device according to claim 7, **characterised in that** the passage sub-divider (24) has a further precise fitting section (29) which is so designed that it only partly fills the assigned pressure medium passage (4), while the point of application for the locking element (38) is expediently located axially between the two precise fitting sections (28, 29).

9. Sub-dividing device according to claim 8, **characterised in that** the further precise fitting section (29) has one or more flattened areas (33) on its outer periphery.

10. Sub-dividing device according to any of claims 1 to 9, **characterised in that** the locking element or elements (38) is or are pin-like in form.

11. Sub-dividing device according to any of claims 1 to 10, **characterised in that** the locking element or elements (38) has/have a length such that in the locked state their end section (45) opposite the passage sub-divider (24) protrudes a short distance from the assigned passage component (1), with the protruding end section (45) expediently forming a handling section (46) for gripping the locking element (38).

12. Sub-dividing device according to any of claims 1 to 11, **characterised by** securing means (47) to secure the position of the locking element (38) in the locking position in locking engagement with the passage sub-divider (24).

13. Sub-dividing device according to claim 12, **characterised in that** the securing means (47) have a securing element (48) which overlaps and holds the locking element (38) and is to be fastened to the assigned passage component (1).

14. Sub-dividing device according to claim 13, **characterised in that** the securing element (48) is in the form of a preferably cover-like closing element and has sealing means (53) which, with the securing element (48) fastened to the passage component (1), make sealing contact at least around the mouth (43) of the cross-passage (42).

15. Passage component with sub-dividing device, with a passage component (1) with at least one pressure medium passage (4) which is assigned one or more sub-dividing devices (18) according to any of claims 1 to 14.

16. Passage component with sub-dividing device according to claim 15, **characterised by** the passage component (1) being in the form of a valve support for valves (3) used for fluidic control.

17. Passage component with sub-dividing device according to claim 16, **characterised in that** there are leading away from the pressure medium passage (4) accommodating the passage sub-divider (24) several branch passages (7) opening out at a mounting face (8) for the valves (3), with at least one of them forming a cross-passage (42) to accommodate a locking element (38).

18. Passage component with sub- dividing device according to claim 17, **characterised in that** the length dimensions of the passage sub-divider (24) and the position of the point of application for the locking element (38) provided on the passage sub-divider (24) are so coordinated with the respective spacing of the branch passages (7) that the point of application is at the same height as a branch passage (7, 42) when the passage sub-divider (24) is pushed into the pressure medium passage (4) until it makes contact with a stop element (55) inserted in the pressure medium passage (4) through an adjacent branch passage (7).

## Revendications

1. Système de séparation pour séparer de manière étanche aux fluides un canal pour fluide sous pression (4), prévu dans un composant à canaux (1), en deux parties (22a, 22b) successives coaxialement, comportant un séparateur de canal (24), qui est destiné à être inséré entièrement dans le canal pour fluide sous pression (4) concerné jusqu'à la zone de séparation (23) souhaitée et qui est muni de moyens d'étanchéité (26) prévus pour coopérer de manière étanche avec la paroi (27) du canal pour fluide sous pression (4), et comportant des moyens de fixation destinés à fixer le séparateur de canal (24) au niveau de la zone de séparation (23), **caractérisé en ce que** le séparateur de canal (24) est réalisé sous la forme d'une pièce à forme ajustée, qui est destinée à être positionnée à la manière d'un bouchon dans le canal pour fluide sous pression (4) concerné, et est munie de moyens d'étanchéité (26) disposés dans la région du pourtour extérieur, et **en ce que** les moyens de fixation sont réalisés sous la forme de moyens de verrouillage (35) et comportent au moins un élément de verrouillage (38) pouvant être guidé à travers un canal transversal (42), débouchant dans le canal pour fluide sous pression (4), pour entrer en prise de verrouillage avec le séparateur de canal (24), le séparateur de canal (24) étant formé par un corps de séparation (25) et par les moyens d'étanchéité (26) fixés sur celui-ci, et l'engagement de verrouillage étant prévu entre l'élément de verrouillage (38) et le corps de séparation (25).

2. Système de séparation selon la revendication 1, **caractérisé en ce que** les moyens de verrouillage (35) comportent au moins un évidement de verrouillage (36), qui est prévu sur le pourtour extérieur du séparateur de canal (24) et dans lequel peut s'engager l'élément de verrouillage (38).

3. Système de séparation selon la revendication 2, **caractérisé en ce que** l'évidement de verrouillage (36) est réalisé sous la forme d'une rainure périphérique (37) qui s'étend sur tout le pourtour extérieur du séparateur de canal (24).

4. Système de séparation selon l'une des revendications 1 à 3, **caractérisé en ce que** l'élément de verrouillage (38) et le séparateur de canal (24) sont conformés de telle sorte qu'il se produit un engagement à verrouillage par emboîtement au moins dans le sens longitudinal du canal pour fluide sous pression (4) concerné.

5. Système de séparation selon l'une des revendications 1 à 4, **caractérisé en ce que** le corps de séparation (25) est réalisé d'un seul tenant.

6. Système de séparation selon l'une des revendications 1 à 5, **caractérisé en ce que** les moyens d'étanchéité (26) comportent au moins une bague d'étanchéité maintenue dans une rainure périphérique (32) du corps de séparation (25).

7. Système de séparation selon l'une des revendications 1 à 6, **caractérisé en ce que** le séparateur de canal (24) comporte dans la zone des moyens d'étanchéité (26) une partie à forme ajustée (28), qui est conformée de telle sorte qu'elle remplit la totalité de la section du canal pour fluide sous pression (4) concerné.

8. Système de séparation selon la revendication 7, **caractérisé en ce que** le séparateur de canal (24) comporte une autre partie à forme ajustée (29), qui est conformée de telle sorte qu'elle ne remplit que partiellement la section du canal pour fluide sous pression (4) concerné, la zone de contact pour l'élément de verrouillage (38) étant située avantageusement dans le sens axial entre les deux parties à forme ajustée (28, 29).

9. Système de séparation selon la revendication 8, **caractérisé en ce que** l'autre partie à forme ajustée (29) comporte sur le pourtour extérieur une ou plusieurs zones aplaties (33).

10. Système de séparation selon l'une des revendications 1 à 9, **caractérisé en ce que** ledit au moins un élément de verrouillage (38) est réalisé en forme de tenon.

11. Système de séparation selon l'une des revendications 1 à 10, **caractérisé en ce que** ledit au moins un élément de verrouillage (38) possède une longueur telle que, dans la position de verrouillage, il s'avance avec sa zone d'extrémité (45), opposée au séparateur de canal (24), sur une courte distance hors du composant à canaux (1) concerné, la zone d'extrémité (45) en saillie formant avantageusement une partie de manipulation (46) pour saisir l'élément de verrouillage (38).

12. Système de séparation selon l'une des revendications 1 à 11, **caractérisé par** des moyens de sécurité (47) pour sécuriser la position de l'élément de verrouillage (38) dans la position de verrouillage en prise avec le séparateur de canal (24).

13. Système de séparation selon la revendication 12, **caractérisé en ce que** les moyens de sécurité (47) comportent un élément de sécurisation (48), qui enserre l'élément de verrouillage (38) par le dessus et qui est destiné à être fixé sur le composant à canaux (1) concerné.

14. Système de séparation selon la revendication 13, **caractérisé en ce que** l'élément de sécurisation (48) est réalisé de préférence sous la forme d'un élément de fermeture de type couvercle et comporte des moyens d'étanchéité (53) qui, lorsque l'élément de sécurisation (48) est fixé sur le composant à canaux (1), sont en contact étanche avec le composant à canaux (1) au moins autour de l'embouchure (43) du canal transversal (42).

15. Composant à canaux avec un système de séparation, avec un composant à canaux (1) qui comporte au moins un canal pour fluide sous pression (4), auquel est associé au moins un système de séparation (18) selon l'une des revendications 1 à 14.

16. Composant à canaux avec un système de séparation selon la revendication 15, **caractérisé par** une configuration du composant à canaux (1) en forme de support de vannes pour des vannes (3) destinées à commander un fluide.

17. Composant à canaux avec un système de séparation selon la revendication 16, **caractérisé en ce que** plusieurs canaux de dérivation (7) partent du canal pour fluide sous pression (4) recevant le séparateur de canal (24), lesquels débouchent dans une surface de montage (8) pour les vannes (3) et parmi lesquels au moins l'un forme un canal transversal (42) destiné à recevoir un élément de verrouillage (38).

18. Composant à canaux avec un système de séparation selon la revendication 17, **caractérisé en ce que** les dimensions en longueur du séparateur de canal (24) et la position des zones de contact pour l'élément de verrouillage (38) prévues sur le séparateur de canal (24) sont adaptées à la distance réciproque entre les canaux de dérivation (7), de telle sorte que la zone de contact est située à la même hauteur qu'un canal de dérivation (7, 42), lorsque le séparateur de canal (24) est inséré dans le canal pour fluide sous pression (4) jusqu'à entrer en contact avec un élément de butée (55) introduit dans le canal pour fluide sous pression (4) en passant à travers un canal de dérivation (7) adjacent.
